# FASCICULE DE BREVET EUROPEEN

(11) **EP 2 121 422 B1**
(45) Date de publication et mention de la délivrance du brevet: **11.01.2012**
(21) Numéro de dépôt: 08775547.6
(22) Date de dépôt: 08.02.2008
(51) Int. Cl.: B62M 3/08

(54) **PEDALE DE BICYCLETTE A ENCLENCHEMENT ET DECLENCHEMENT AUTOMATIQUES**
FAHRRADPEDAL MIT AUTOMATISCHER HAFTUNG UND LÖSUNG
BICYCLE PEDAL WITH AUTOMATIC ATTACHMENT AND DETACHMENT

(30) Priorité: 13.02.2007 FR 0701017
(43) Date de publication de la demande: 25.11.2009
(73) Titulaire: TIME SPORT INTERNATIONAL, 58 640 Varennes-Vauzelles (FR)
(72) Inventeur: SERVIGNAT, Hervé, 38300 Succieu (FR); DE BAST, Jean-François, F-38090 Vaulx Milieu (FR)
(74) Mandataire: Michardière, Bernard
(86) Numéro de dépôt international: PCT/FR2008/000157
(87) Numéro de publication internationale: WO 2008/129145

(56) Documents cités:
- EP-A1- 1 063 161
- WO-A-00/20943
- FR-A1- 2 620 409
- FR-A1- 2 862 041
- GB-A- 2 266 687
- JP-A- 2 145 321
- NL-C1- 1 010 504
- US-A- 5 259 270

## Description

L'invention est relative à une pédale de bicyclette à enclenchement et déclenchement automatiques, du genre de celles qui comprennent un corps monté rotatif sur un axe avec :
- un moyen de butée frontale propre à coopérer avec une surface de butée conjuguée prévue sur une cale fixée sous la semelle de chaussure de l'utilisateur;
- un organe de maintien monté rotatif autour d'un axe d'articulation parallèle à celui de la pédale, propre à être appliqué par un moyen de rappel élastique contre la cale pour assurer l'accrochage de la cale à la pédale.

Les pédales de bicyclette automatiques sont largement utilisées par les cyclistes pour toutes pratiques telles que course sur route, VTT, cyclotourisme et autres. Le cycliste assure l'enclenchement de la cale en l'engageant sur la pédale et en exerçant une pression du pied, ce qui provoque l'accrochage de la cale à la pédale par ouverture puis retour de l'organe de maintien mobile contre la cale. Pour le déclenchement et le décrochage, le cycliste effectue un mouvement de torsion du pied qui permet de libérer automatiquement la cale de la pédale par ouverture de l'organe de maintien.

Les brevets EP 1 377 496 B1 et FR 2 862 041, au nom de la demanderesse montrent de telles pédales.

De telles pédales automatiques donnent relativement satisfaction, mais leur poids et leur encombrement sont à réduire. Le montage des pièces composantes est en outre relativement long à effectuer.

EP 1 063 161 A1 sur lequel le préambule de la revendication 1 est basé montre une pédale automatique de cycle, du genre en question, dans laquelle le moyen de rappel élastique comprend un élément de flexion immobilisé à une extrémité dans le corps de pédale, dont la direction moyenne longitudinale est orthogonale à l'axe de la pédale et dont l'autre extrémité appuie contre l'organe de maintien. Cet organe de maintien présente en section une forme de E retourné avec deux branches sensiblement horizontales au-dessus de l'axe de rotation. La section de l'organe de maintien ne permet pas l'extension de la branche élastique courbe jusqu'à l'extrémité arrière de l'organe. En outre, la branche élastique de rappel a une forme complexe. Cette branche élastique courbe, notamment lorsqu'elle vient de moulage avec le corps de pédale, encombre la partie avant de la pédale, tout en l'alourdissant.

L'invention a pour but, surtout, de fournir une pédale automatique du genre définis dons le poids soit diminue par apport aux solutions existantes, de même que l'encombrement. En outre, il est souhaitable que le montage de cette pédale soit rendu plus rapide. Il convient de plus que la pédale reste d'une construction robuste et économique, présente des espaces dégagés pour l'évacuation de saletés éventuelles notamment boue ou terre, sans créer de frottement parasite au niveau de la rotation entre axe et corps de pédale.

Selon l'invention, une pédale de bicyclette à enclenchement et déclenchement automatiques, comprend un corps monté rotatif sur un axe avec:
- un moyen de butée frontale propre à coopérer avec une surface de butée conjuguée prévue sur une cale fixée sous la semelle de chaussure de l'utilisateur ;
- un organe de maintien monté rotatif autour d'un axe d'articulation parallèle à celui de la pédale, propre à être appliqué par un moyen de rappel élastique contre la cale pour assurer l'accrochage de la cale à la pédale,
le moyen de rappel élastique comprenant un élément de flexion immobilisé à une extrémité dans le corps de pédale, dont la direction moyenne longitudinale est orthogonale à l'axe de la pédale et dont l'autre extrémité appuie contre l'organe de maintien,
et est caractérisée en ce que :
- l'organe de maintien est constitué par un arceau en forme générale de U présentant deux branches orientées radialement reliées par une partie centrale, le corps comportant des alésages, de part et d'autre du corps, admettant un même axe géométrique, chaque branche de l'arceau comportant un orifice, propre à venir se placer en regard d'un alésage correspondant du corps, pour une articulation autour de l'axe géométrique des alésages,
- et l'élément de flexion est constitué par une plaque de flexion dont l'extrémité, autre que celle immobilisée dans le corps, appuie contre l'arceau.

De préférence, l'élément de flexion passe au-dessus de l'axe géométrique d'articulation de l'organe de maintien.

La plaque de flexion peut présenter une forme rectangulaire, ou une forme trapézoïdale dont la grande base est logée dans le corps de pédale et la petite base est en appui contre l'organe de maintien.

La plaque de flexion peut être réalisée en matériau composite, en particulier avec des fibres de verre ou des fibres de carbone liées par une résine et orientées orthogonalement à l'axe de la pédale.

Avantageusement, l'immobilisation d'une extrémité de la plaque dans le corps de pédale consiste en un encastrement réalisé par serrage de l'extrémité de la plaque de flexion contre le corps de pédale à l'aide d'un capot. Le capot peut être en matière plastiqué rigidifiée par une cornière métallique.

Selon une variante, l'extrémité immobilisée de la plaque est logée dans le corps de pédale sans y être bloquée, la face supérieure de l'extrémité appuyant contre le corps et le frottement des surfaces en contact assurant le maintien en place de la plaque, une tige solidaire du corps s'étend transversalement sous la plaque dont la face inférieure appuie contre la tige, l'autre extrémité de la plaque appuyant, par sa face supérieure, contre l'organe de maintien, de sorte que la plaque travaille en flexion sur trois points.

A son extrémité éloignée de l'encastrement, la plaque de flexion appuie, de préférence, contre un élément de butée transversal monté rotatif sur l'organe de maintien de la pédale. Cet élément transversal de butée peut être formé par un cylindre monté rotatif et comprenant plusieurs faces planes dont les distances radiales à l'axe géométrique du cylindre sont différentes, la rotation de cet élément permettant de modifier la précontrainte de la plaque de flexion.

L'organe de maintien peut être constitué par un arceau en forme générale de U présentant deux branches orientées radialement reliées par une partie transversale. L'arceau vient s'inscrire dans l'arrière du corps de pédale qui comporte de chaque côté une oreille faisant saillie vers le bas, la face extérieure d'une branche de l'arceau venant s'appliquer contre la face intérieure de l'oreille associée, chaque oreille comportant, dans sa partie basse, un alésage pour recevoir un axe d'articulation traversant un orifice de la branche associée, l'espace entre les axes d'articulation restant dégagé.

La pédale comporte avantageusement un cliquet propre à retenir l'organe de maintien dans une position ouverte, lors du dégagement de la cale, à l'encontre d'une lame ressort, et à libérer cet organe de maintien lors de l'engagement de la cale ; le cliquet est réalisé sous forme d'un cadre dont un bord transversal est engagé dans un logement du corps de pédale et constitue l'axe d'articulation du cliquet, l'autre extrémité du cliquet venant en appui contre l'organe de maintien. Pour limiter le nombre de pièces, la lame ressort du cliquet peut être d'une seule pièce en matière plastique avec le cliquet, l'ensemble étant maintenu par serrage au-dessus de l'élément de flexion.

Un sous-ensemble prêt au montage peut être formé en engageant dans une fenêtre du capot, la lame ressort est la plaque de flexion. Ce sous-ensemble peut également comprendre le cliquet, notamment lorsque cliquet et la lame ressort sont d'une seule pièce.

Selon une variante avantageuse, l'arrière du corps de pédale est dépourvu de partie arrière haute transversale pouvant servir d'appui à l'arrière de la cale, et un moyen de butée est prévu en partie haute à l'arrière de l'arceau pour coopérer avec un moyen de butée conjugué prévu à la partie inférieure d'une extension arrière de la cale, et pour empêcher un accrochage lorsque le bec avant de la cale n'est pas correctement engagé sous le rebord avant de la pédale.

L'invention consiste, mises à part les dispositions exposées ci-dessus, en un certain nombre d'autres dispositions dont il sera plus explicitement question ci-après à propos d'un exemple de réalisation décrit avec référence aux dessins annexés, mais qui n'est nullement limitatif. Sur ces dessins :
Fig. 1 est une coupe verticale d'une pédale selon l'invention, suivant un plan orthogonal à l'axe de la pédale, la cale étant en cours d'accrochage.
Fig. 2 montre, semblablement à Fig. 1, la pédale avec la cale accrochée.
Fig. 3 est une vue de dessus de la pédale de Fig. 1 et 2, à échelle différente.
Fig. 4 est une vue en perspective de la pédale retournée face vers le bas.
Fig. 5 est une vue éclatée en perspective de la pédale retournée face vers le bas, et
Fig. 6 est une vue éclatée de la pédale face vers le haut.
Fig.7 est une coupe verticale, semblable à Fig.1, d'une variante de réalisation.
Fig.8 est une coupe par un plan longitudinale vertical médian, semblable à Fig.2, d'une autre variante de réalisation, certaines pièces n'étant pas représentées, et
Fig.9 est une coupe verticale, semblable à Fig.8, de la cale arrêtée en cours d'accrochage selon une mauvaise position.

En se reportant aux dessins, on peut voir une pédale 1 de bicyclette à enclenchement et déclenchement automatiques. La pédale représentée selon l'exemple est destinée à être montée du côté gauche de la bicyclette.

Par la suite, les termes « avant » et « arrière » sont à comprendre pour une pédale en position horizontale montée sur une bicyclette, et suivant le sens de progression normale de la bicyclette.

La pédale 1 comprend un corps 2 rotatif sur un axe 3 qui fait saillie d'un côté du corps par une partie 3a prévue pour comporter un filetage en vue du montage à l'extrémité d'une manivelle.

La pédale 1 comporte, sur au moins une face du corps, un moyen de butée frontale 4 propre à coopérer avec une surface de butée conjuguée 5 prévue sur une cale 6 fixée sous la semelle S de la chaussure de l'utilisateur. La cale 6 comporte une partie 6a en saillie vers le bas, formant une came. La butée 5 est constituée par la face frontale de la saillie 6a.

Un rebord 7 situé à l'avant de la pédale forme un retour vers l'axe 3 de la pédale. Un bec 8 prévu à l'avant de la cale 6 vient s'engager sous le rebord 7.

Un organe de maintien 9 est monté rotatif autour d'un axe géométrique d'articulation A parallèle à l'axe de la pédale. Dans la réalisation représentée, l'axe A est situé en arrière de l'axe 3 de la pédale et plus bas que cet axe lorsque la pédale est horizontale. L'organe de maintien 9 est avantageusement constitué par un arceau 10 en forme générale de U dont la concavité est tournée vers l'avant. Cet arceau présente deux branches 10a orientées radialement reliées par une partie 10b formant traverse et limitée par une surface cylindrique admettant pour axe géométrique l'axe A.

En variante l'arceau 10 pourrait se trouver en avant de l'axe 3 , avec sa concavité tournée vers l'arrière, la came 6a serait aussi tournée en sens opposé.

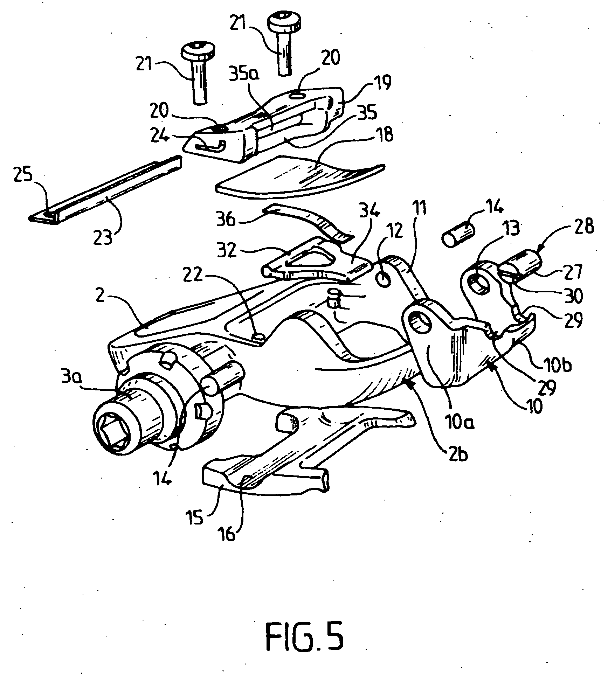

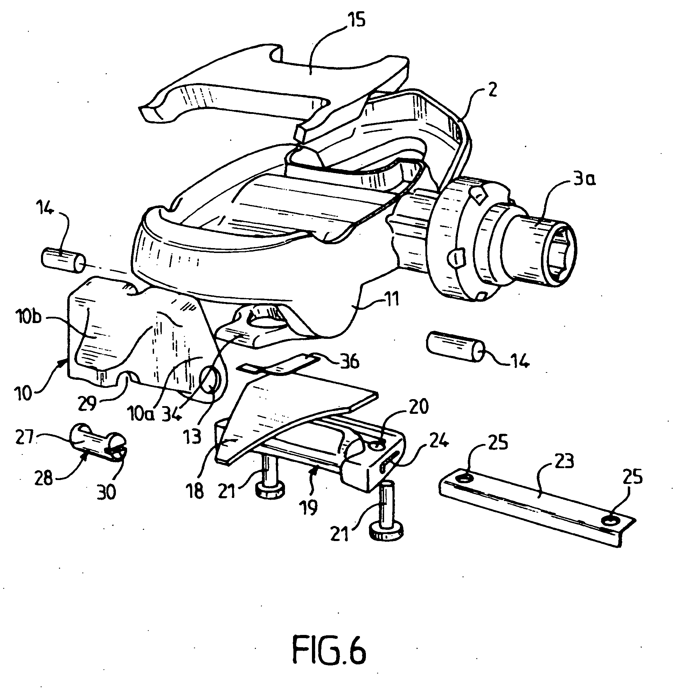

L'arceau 10 vient s'inscrire dans l'arrière du corps de pédale. L'arrière du corps de pédale peut être constitué par un contour 2b, formant une ceinture. En variante, ce contour 2b peut ne pas exister. Le contour 2b comporte comme visible sur Fig.6, de chaque côté, une oreille 11 faisant saillie vers le bas. La face extérieure d'une branche 10a vient s'appliquer contre la face intérieure de l'oreille 11 associée. Chaque oreille 11 comporte, dans sa partie basse, un alésage 12 (Fig.5) débouchant au moins sur sa face interne. Cet'alésage 12 peut être borgne et fermé du côté de la face externe de l'oreille. En variante l'alésage 12 peut déboucher sur la face externe. Les alésages 12 des deux oreilles 11 situés de part et d'autre du corps de pédale admettent un même axe géométrique.

Chaque branche 10a de l'arceau comporte un orifice 13 (Fig.5) traversant, propre à venir se placer en regard d'un alésage 12 correspondant. Les deux orifices 13 admettent un même axe géométrique. Après avoir engagé les branches 10a entre les oreilles 11, on met en place de chaque côté, un axe 14 en l'engageant dans l'orifice 13 et dans l'alésage 12. L'axe 14 cylindrique est emmanché à force dans l'alésage 12. Les deux axes 14 logés dans chacune des oreilles 11 sont coaxiaux et assurent le montage rotatif de l'arceau 10 entre les oreilles 11. Les longueurs des axes sont limitées à la somme des épaisseurs des parois traversées par les axes 14 de sorte que l'espace entre les extrémités intérieures des axes reste dégagé.

En variante, l'oreille 11 peut comporter deux joues séparées par un logement recevant la branche 10a entre les joues, lesquelles comportent chacune un alésage pour recevoir les extrémités de l'axe 14 : ce montage en chape de chaque axe permet ainsi de rigidifier l'articulation.

La partie 6a de la cale en saillie vers le bas vient se loger en arrière d'un plateau 15 de la pédale, avec une face inférieure 16 recouvrant la zone de l'axe 3. La face arrière du plateau 15 constitue le moyen de butée frontale 4. La came 6a comporte, en partie inférieure, un bec 17 en saillie vers l'arriéré propre à être recouvert et accroché par l'arceau 10.

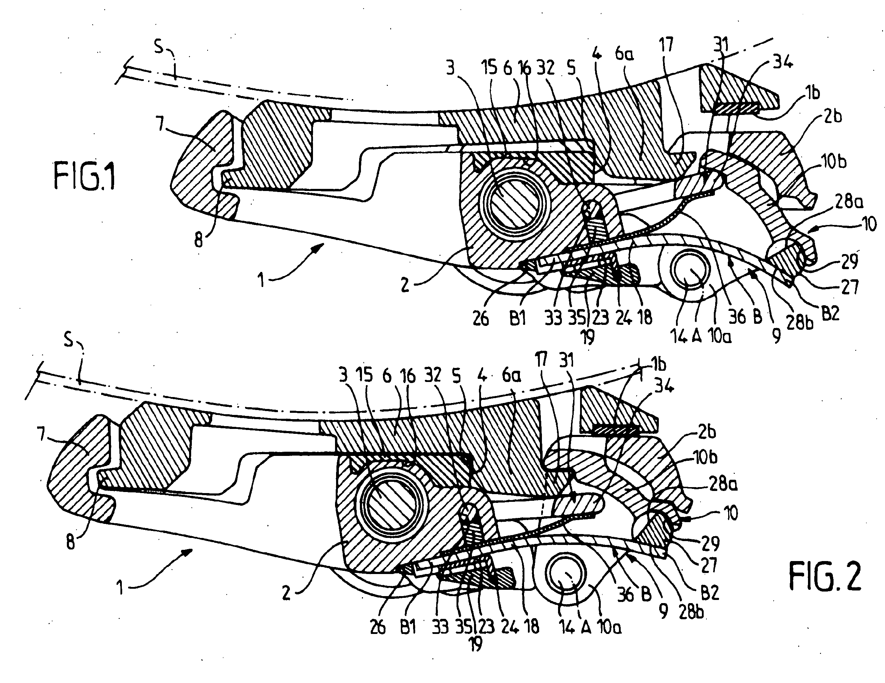

Le moyen de rappel élastique de l'arceau 10, comprend un élément de flexion B dont la direction moyenne longitudinale est orthogonale à l'axe 3 de la pédale. Une extrémité B1 de l'élément de flexion est logée dans le corps de pédale 2 tandis que l'autre extrémité B2 appuie contre l'arceau 10, au niveau du bord inférieur de sa partie transversale, de manière à exercer un rappel dans le sens contraire d'horloge, selon Fig. 1 et 2, autour de l'axe géométrique A. L'élément de flexion B passe au-dessus de l'axe géométrique d'articulation A de l'organe de maintien 9. Selon la variante des Fig.1 et 2, l'extrémité B1 est encastrée, c'est-à-dire bloquée, dans le corps de pédale 2.

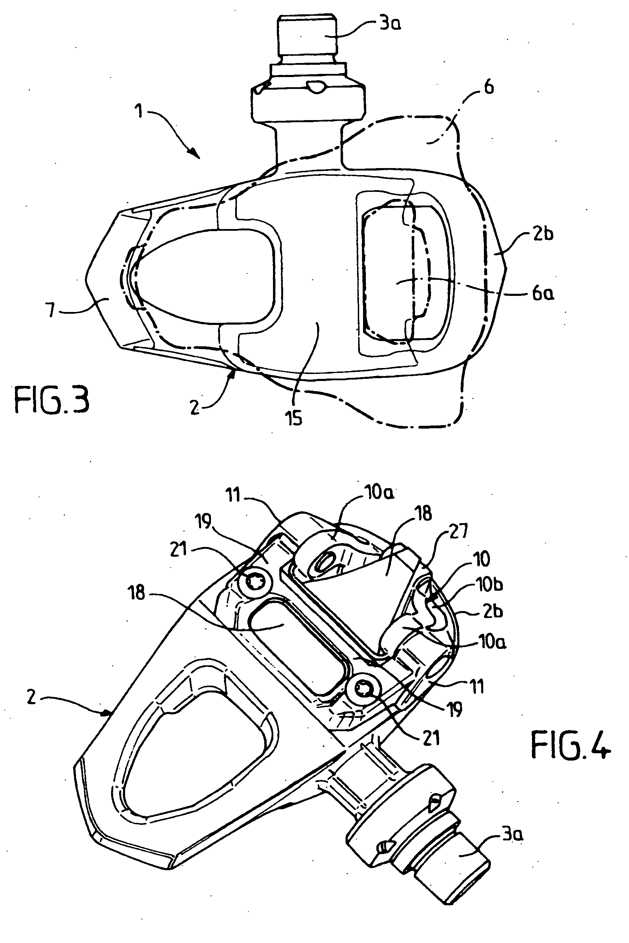

L'élément de flexion B est avantageusement constitué par une plaque de flexion 18. Lorsque cette plaque 18 est réalisée en un matériau homogène et isotrope, par exemple en métal notamment en acier inoxydable, cette plaque 18 est configurée de préférence sous une forme isocontrainte. Elle présente alors sensiblement une forme en trapèze isocèle dont la grande base est encastrée dans le corps 2 et la petite base en appui contre l'arceau 10, comme visible sur Fig. 4.

La plaque 18 peut être réalisée en matériau composite, en particulier constitué de fibres de verre ou de fibres de carbone liées par une résine et orientées essentiellement orthogonalement à l'axe 3. Dans ce cas, la plaque 18 a de préférence une forme rectangulaire limitant les risques de délaminage de la plaque dans la zone de contact de ses arêtes marginales avec l'arceau 10. Toutefois, dans le cas où les fibres ont des orientations croisées, la forme isocontrainte en trapèze peut être envisagée. Si besoin, la plaque de flexion peut présenter, dans sa zone destinée à être encastrée, un profil; en T par exemple, palliant tout risque de glissement éventuel de la plaque lors de ses sollicitations.

L'encastrement de la plaque 18 dans le corps 2 de pédale est réalisé à l'aide d'un capot 19, par exemple en matière plastique, de forme générale rectangulaire. Le capot 19 comporte des profils de raidissement, et deux trous 20 espacés parallèlement à l'axe 3 de la pédale. Les trous 20 sont prévus pour le passage de vis de blocage 21 qui coopèrent avec des trous taraudés 22 prévus dans le corps de pédale. Les trous 22 s'ouvrent dans la face inférieure du corps de pédale.

Le capot 19 est renforcé par une cornière métallique 23 dont une aile, perpendiculaire à la plaque dans sa zone encastrée, est engagée dans une rainure 24 du capot 19, tandis que l'autre aile de la cornière fait saillie vers l'avant et est appliquée contre la face inférieure de la plaque 18. Cette seconde aile de la cornière 23 comporte deux trous 25 venant au droit des trous 22 et 20 pour être traversés par les vis 21 qui encadrent le bord avant de la plaque 18. Une variante de construction peut être envisagée avec la cornière métallique 23 directement surmoulée par le capot 19.

Pour limiter la concentration de contraintes dans la plaque au niveau du bord de l'encastrement, ladite zone d'encastrement peut être constituée par un matériau très légèrement souple dans la zone directement en contact avec la plaque, ou la plaque elle-même peut être constituée par une ou plusieurs strates en élastomère.

La face inférieure du corps 2 de pédale comporte dans sa zone arrière une surface en retrait suivant la direction verticale, limitée vers l'avant par un redent 26 contre lequel prend appui le bord avant du capot 19.

L'extrémité de la plaque de flexion 18 éloignée de l'encastrement est en appui contre l'arceau 10 par l'intermédiaire d'un élément de butée transversal monté rotatif sur l'arceau 10. L'élément de butée 27 est avantageusement constitué par un cylindre de réglage 28 présentant des portées circulaires à ses deux extrémités longitudinales, portées qui sont reçues dans des logements semi-cylindriques 29, ouverts vers le bas lorsque la pédale est horizontale. Les logements 29 sont prévus dans des parois latérales orthogonales à l'axe 3 de pédale, ces parois faisant saillie vers l'arrière de l'arceau 10. L'écartement entre les logements 29, parallèlement à l'axe A de la pédale, est inférieur à l'écartement entre les orifices 13.

Le cylindre 28 présente, entre ses portées d'extrémité circulaires, des facettes planes 28a, 28b, parallèles à l'axe du cylindre, situées respectivement à des distances radiales différentes de l'axe géométrique de ce cylindre 28. Au moins l'une des faces d'extrémité du cylindre 28 comporte une rainure diamétrale 30 (Fig.5) permettant de faire tourner le cylindre 28 dans les logements 29 par exemple à l'aide d'un tournevis pour un réglage.

L'extrémité de la plaque 18 prend appui contre l'une des facettes du cylindre 28, par exemple la facette 28b selon Fig. 1 et 2. Le cylindre 28 étant monté rotatif dans les logements 29, lors de la rotation de l'arceau 10, l'extrémité de la plaque 18 pourra rester en contact sur toute l'étendue de la face 28b grâce à la rotation du cylindre 28 dans les logements 29.

En modifiant la position angulaire du cylindre 28 on peut faire appuyer l'extrémité de la plaque 18 sur une autre facette telle que 28a qui se trouve à une distance différente de l'axe du cylindre, ce qui modifie la contrainte de la plaque 18 et donc l'effort de rappel élastique sur l'arceau 10. Il est ainsi possible de régler le couple de rappel exercé sur l'arceau 10.

Avantageusement, la pédale comporte également un cliquet 31 sensible au dégagement et à l'engagement de la cale 6 sur la pédale. Le cliquet 31 est prévu pour retenir l'organe de maintien 9, constitué par l'arceau 10, dans une position ouverte illustrée sur Fig. 1 lors du dégagement de la cale, à l'encontre du moyen de rappel élastique 18.

Le cliquet 31 est réalisé sous forme d'un cadre (voir Fig. 5) présentant une traverse avant 32 de forme cylindrique constituant un organe d'articulation reçu dans un logement 33 prévu dans le corps 2 de pédale et ouvert vers le bas. Le logement 33 s'étend parallèlement à l'axe de la pédale. Depuis les extrémités de la traverse 32 des branches s'étendent vers l'arrière pour se rejoindre et former une plaquette 34 sensiblement rectangulaire. En position relevée du cliquet 31 (Fig.1), la plaquette 34 vient en appui contre le bord avant de la traverse de l'arceau 10 pour retenir cet arceau en position ouverte.

La traverse 32 est maintenue contre le fond supérieur semi-cylindrique du logement 33 par une barrette 35 du capot 19. Au-dessous de la barrette 35, le capot comporte une fenêtre transversale 35a (Fig.5) qui est traversée par la plaque de flexion 18 et une lame ressort 36. Le cliquet 31 est rappelé en position relevée (Fig. 1) par la lame ressort 36 dont la partie avant est bloquée dans le corps de pédale 2 par serrage entre ce corps et la lame 18. La lame 36 est cambrée et appuie contre la plaquette 34 par son extrémité éloignée du corps de pédale 2.

Le cliquet 31 est avantageusement réalisé en matière plastique. La lame ressort 36 peut être réalisée d'une seule pièce en matière plastique avec le cliquet.

Des moyens de blocage positif suivant une direction orthogonale à l'axe 3 peuvent être prévus entre la plaque de flexion 18 et le corps 2, notamment sous forme de pions et logements conjugués, pour compléter le l'arrêt dû au serrage.

Le capot 19 permet d'assurer le blocage simultané par serrage de la plaque de flexion 18 et de la lame ressort 36, et le maintien du cliquet 31.

Le plateau 15 du corps de pédale est soit surmoulé, soit rapporté et maintenu par un moyen de fixation efficace. Le plateau 15 est réalisé en un matériau qui peut être différent de celui du corps 2, de préférence en un matériau performant en terme de résistance à l'usure et au matage dans les zones de contact telles que 4 avec la cale 6.

La cale 6 peut présenter, vers l'arrière, une zone souple 1b prévue pour s'appliquer contre le pont arrière 2b du corps de pédale afin d'assurer le calage des jeux verticaux.

L'assemblage de l'arceau 10 de la plaque de flexion 18 et du cliquet 31 est particulièrement simple et rapide. La succession des opérations de montage indiquée ci-après peut être adaptée selon les nécessités.

On commence par installer l'arceau 10 dans le corps 2 en disposant les branches 10a de l'arceau entre les oreilles 11 du corps de pédale, et en plaçant les orifices 13 en regard des alésages 12. Les axes 14 sont ensuite engagés, de l'intérieur, dans les orifices 13 et les alésages 12. Un espace libre subsiste entre les axes 14 pour le montage des composants suivants. L'arceau 10 est repoussé en position haute illustrée sur Fig. 2 et la traverse 32 du cliquet 31 peut être engagée dans le logement 33. Le cylindre 28 est placé dans les logements 29.

Le capot 19 avec la cornière 23, la lame ressort 36 et la plaque de flexion18. sont ensuite mis en place. Pour faciliter le montage de la pédale, un sous-ensemble prêt à être assemblé est avantageusement formé en engageant au préalable, dans la fenêtre 35a du capot, la lame ressort 36 et la plaque de flexion 18 tandis que la cornière 23 est également mise en place dans le capot, au-dessous de la plaque 18. Lorsque la lame ressort 36 est d'une seule pièce avec le cliquet 31, la barrette 35 se trouve légèrement serrée entre la traverse 32 et la lame 36, ce qui favorise le maintien du sous-ensemble, lequel comprend alors également le cliquet 31.

La lame 36 et la plaque 18 sont ensuite bloquées contre le corps de pédale 2 par la traverse 23 et le capot 19, à l'aide des vis 21.

Le réglage de la précontrainte de la plaque de flexion 18 est assuré en orientant le cylindre 28 dans la position convenable.

Le fonctionnement de la pédale est rappelé brièvement ci-après.

Lorsque la cale 6, 6a n'est pas enclenchée, comme illustré sur Fig. 1, le cliquet 31 est en position relevée et son bord arrière est en appui contre le fond d'un logement prévu dans le bord transversal avant de l'arceau 10. Cet arceau 10 est maintenu en position ouverte, reculée.

Lorsque le cycliste souhaite accrocher la cale 6 à la pédale 1, il engage le bec avant sous le rebord 7 et fait descendre la came 6a dans l'espace libre situé en arrière du plateau 15 et en avant de la ceinture arrière 2b de la pédale. L'arceau 10 étant reculé, le cycliste ne rencontre aucune résistance sensible pour faire descendre la came 6a dans cet espace libre et pour pousser le cliquet 31 vers le bas, car l'effort exercé par la lame élastique 36 est relativement faible.

L'abaissement du cliquet 31 par rotation dans le sens d'horloge autour de sa traverse 32, libère l'arceau 10 qui, sous l'action de la plaque de flexion 18 est rappelé dans le sens contraire d'horloge autour des axes 14. La branche transversale de l'arceau 10 vient recouvrir et accrocher le bec arrière 17 de la cale 6. La cale 6 et la chaussure sous laquelle cette cale est fixée sont alors accrochées à la pédale.

Le déclenchement ou décrochage de la cale 6 est obtenu par un mouvement de rotation du pied et de la cale 6 qui provoque le recul de l'arceau 10 jusqu'à libérer le bec 17.

Lorsque la cale 6 se sépare de la pédale 1, alors que l'arceau 10 est en position ouverte, le cliquet 31 est relevé sous l'action de la lame élastique 36 et son bord arrière vient au droit de la branche centrale 10b de l'arceau 10 qui est ainsi retenu dans la position ouverte illustrée sur Fig. 1.

La pédale conforme à l'invention est d'une réalisation simple et robuste, permettant un montage rapide. La réalisation du moyen de rappel élastique selon une plaque de flexion 18 permet une diminution de poids, de même que le fractionnement de l'articulation en deux axes 14 de longueur réduite. Elle permet en outre de loger facilement la fonction cliquet grâce à une conception compacte.

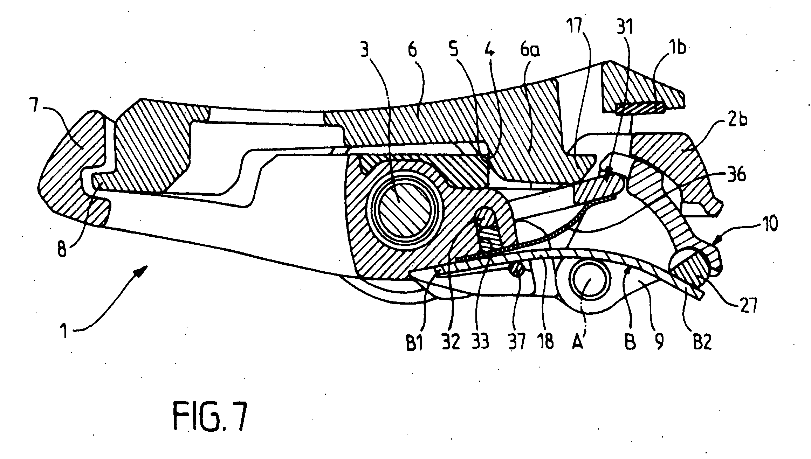

En se reportant à Fig.7, on peut voir une variante de réalisation de la pédale des Fig.1 et 2. La seule modification introduite concerne le montage de la plaque de flexion 18 qui, au lieu d'être encastrée à son extrémité B1 dans le corps 2, est simplement en appui contre ce corps. Les autres éléments de la pédale de Fig.7 sont identiques ou semblables à ceux des Fig.1 et 2 et sont désignés par les mêmes références sans être décrits à nouveau.

L'extrémité B1 de la plaque 18 est logée dans le corps 2 sans y être bloquée. La face supérieure de l'extrémité B1 appuie contre le corps 2, et le frottement des surfaces en contact assure le maintien en place de la plaque 18. Une tige 37, de préférence cylindrique à section circulaire, est solidaire du corps 2 et s'étend transversalement sous la plaque 18, sensiblement au droit de la paroi arrière du logement 33. La face inférieure de la plaque 18 appuie contre une génératrice de la tige 37. L'autre extrémité B2 de la plaque 18 appuie, par sa face supérieure, contre l'élément de butée 27.

La plaque 18 travaille en flexion sur trois points, à savoir deux points extrêmes situés au-dessus de la plaque, et un point intermédiaire situé au-dessous.

Le fonctionnement de la pédale de Fig.7 est semblable à celui expliqué précédemment.

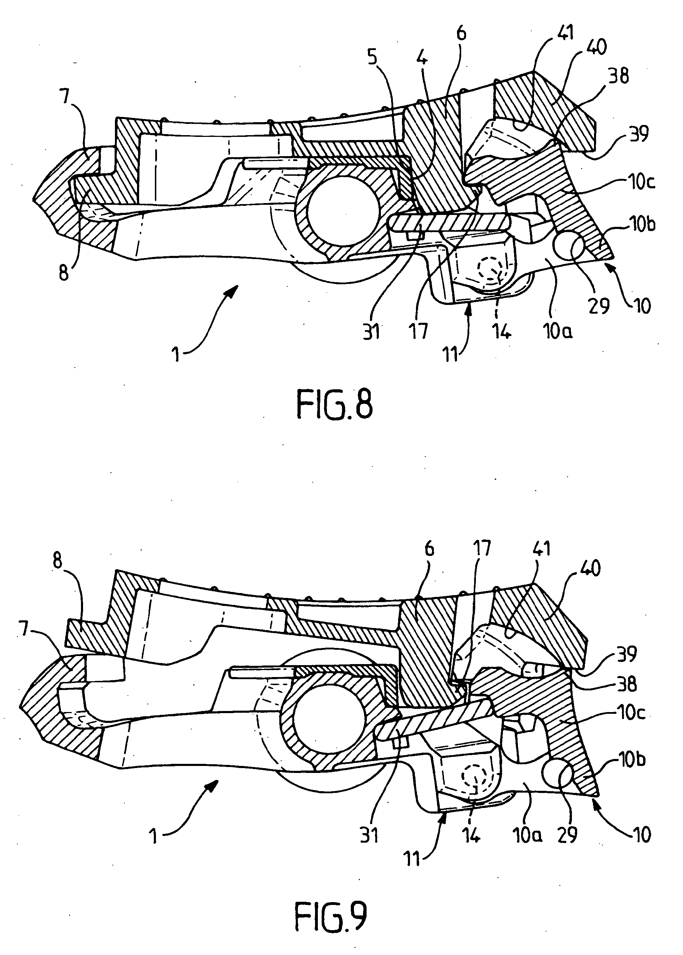

En se reportant à Fig. 8 et 9, on peut voir une variante de réalisation avantageuse de la pédale des Fig.1-6. Selon cette variante, le contour 2b constituant la partie arrière du corps de pédale dans les figures précédentes est supprimé.

Les éléments de la pédale des Fig. 8-9 identiques ou jouant des rôles analogues à des éléments déjà décrits à propos des figures précédentes sont désignés par les mêmes références numériques, sans que leur description soit reprise.

Selon Fig.8 les branches 10a de l'arceau, articulées sur le corps de pédale par un axe 14, sont sensiblement horizontales et reliées, à l'arrière, par une traverse 10b perpendiculaire au plan de Fig.8. A mi-distance des branches 10a, l'arceau comporte une partie 10c s'étendant vers le haut depuis la traverse 10b. La partie 10c, sensiblement en forme de L renversé, constitue le moyen d'accrochage du bec arrière 17 de la cale 6

Le bec avant 8 de la cale 6 vient en butée par sa face supérieure contre la surface inférieure du rebord 7 pour assurer une retenue vers le haut. La butée de la cale vers l'avant est toujours assurée par la coopération de la surface arrière 4 du plateau de pédale, située en arrière de l'axe géométrique de rotation de la pédale, et la surface frontale 5 de la cale.

Sur les Fig. 8 et 9 l'élément de flexion B constituant le moyen de rappel élastique de l'arceau 10 n'est pas représenté. Il en est de même pour l'élément de butée 27 qui vient se placer dans les logements 29.

Dans le cas illustré sur Fig.9 où le bec 8 de l'avant de la cale n'est pas engagé sous le rebord 7, l'absence de la partie arrière 2b de la pédale des figures précédentes rend possible un accrochage de la cale 6 par l'arceau 10. Un tel accrochage dans une mauvaise position de la cale 6 doit être empêché.

A cet effet, un moyen de butée 38 est prévu en partie haute à l'arrière de l'arceau 10, pour coopérer avec un moyen de butée conjugué 39 prévu à la partie inférieure d'une extension arrière 40 de la cale 6, lorsque le bec 8 n'est pas correctement engagé sous le rebord 7. La coopération des moyens de butée 38 et 39 empêche la descente de la cale 6 et l'effacement du cliquet 31 qui provoquerait l'accrochage du bec arrière 17 de la cale par la partie 10c de l'arceau 10.

Le moyen de butée 38 est avantageusement constitué par une proéminence sensiblement en forme de dièdre dirigé vers le haut. La proéminence 38 est obtenue par ajout de matière sur la partie arrière haute de la partie 10c de l'arceau. Le moyen de butée conjugué 399 est constitué par une face plane inférieure, sensiblement horizontale, de l'extension arrière 40, laquelle est limitée vers le bas, en avant de la butée 39, par une surface concave 41 pouvant passer par-dessus la proéminence 38 lorsque l'engagement du bec avant 8 est correct sous le rebord 7.

La suppression de la partie arrière 2b se traduit par un gain de place et une plus grande compacité de la pédale. La fabrication est simplifiée et l'esthétique est améliorée.

Le fonctionnement de la pédale des Fig. 8-9 est similaire à celui décrit à propos des figures précédentes.

## Revendications

1. Pédale de bicyclette à enclenchement et déclenchement automatiques, comprenant un corps (2) monté rotatif sur un axe (3) avec :
- un moyen de butée frontale (4) propre à coopérer avec une surface de butée conjuguée (5) prévue sur une cale (6) fixée sous la semelle de chaussure de l'utilisateur ;
- un organe de maintien (9) monté rotatif autour d'un axe d'articulation parallèle à celui de la pédale, propre à être appliqué par un moyen de rappel élastique contre la cale pour assurer l'accrochage de la cale à la pédale,
le moyen de rappel élastique comprenant un élément de flexion (B) immobilisé à une extrémité (B1) dans le corps de pédale, dont la direction moyenne longitudinale est orthogonale à l'axe de la pédale et dont l'autre extrémité appuie contre l'organe de maintien (9),
- l'organe de maintien (9) étant constitué par un arceau (10) en forme générale de U présentant deux branches (10a) reliées par une partie centrale (10b)
- et l'élément de flexion. (B) étant constitué par une plaque de flexion (18) dont l'extrémité (B2), autre que celle immobilisée dans le corps (2), appuie contre l'arceau (10)
**caractérisée en ce que** :
les deux branches (10a) de l'arceau (10) sont orientées radialement relativement à l'axe de rotation de cet organe de maintien (9), le corps (2) comportant des alésages (12), de part et d'autre du corps, admettant un même axe géométrique, chaque branche de l'arceau comportant un orifice (13), propre à venir se placer en regard d'un alésage (12) correspondant du corps (2), pour une articulation autour de l'axe géométrique des alésages (12).

2. Pédale selon la revendication 1, **caractérisée en ce que** l'élément de flexion (B) passe au-dessus de l'axe géométrique d'articulation (A) de l'organe de maintien.

3. Pédale selon la revendication 1 ou 2, **caractérisée en ce que** la plaque de flexion présente une forme rectangulaire.

4. Pédale selon la revendication 1 ou 2, **caractérisée en ce que** la plaque de flexion (18) présente une forme trapézoïdale dont la grande base est logée dans le corps (2) de pédale et la petite base est en appui contre l'organe de maintien (9).

5. Pédale selon l'une des revendications précédentes, **caractérisée en ce que** l'immobilisation d'une extrémité de la plaque dans le corps de pédale consiste en un encastrement réalisé par serrage de l'extrémité de la plaque de flexion (18) contre le corps due pédalé à l'aide d'un capot (10).

6. Pédale selon la revendication 5, **caractérisée en ce que** le capot (19) est en matière plastique rigidifiée par une cornière métallique (23).

7. Pédale selon l'une des revendications précédentes, **caractérisée en ce que** l'extrémité immobilisée (B1) de la plaque est logée dans le corps (2) de pédale sans y être bloquée, la face supérieure de l'extrémité (B1) appuyant contre le corps (2) et le frottement des surfaces en contact assurant le maintien en place de la plaque, une tige (37) solidaire du corps (2) s'étend transversalement sous la plaque (18) dont la face inférieure appuie contre la tige (37), l'autre extrémité (B2) de la plaque appuyant, par sa face supérieure, contre l'organe de maintien (9), de sorte que la plaque travaille en flexion sur trois points.

8. Pédale selon l'une des revendications précédentes, **caractérisée en ce que**, à son extrémité éloignée de l'encastrement, la plaque de flexion (18) appuie contre un élément de butée (27) transversal monté rotatif sur l'organe de maintien (9) de la pédale.

9. Pédale selon la revendication 8, **caractérisée en ce que** l'élément transversal de butée est formé par un cylindre (28) monté rotatif et comprenant plusieurs faces planes (28a, 28b) dont les distances radiales à l'axe géométrique du cylindre sont différentes, la rotation de cet élément permettant de modifier la précontrainte de la plaque de flexion.

10. Pédale selon l'une des revendications précédentes, **caractérisée en ce que** l'arceau (14) vient s'inscrire dans l'arrière du corps de pédale qui comporte de chaque côté une oreille (11) faisant saillie vers le bas, la face extérieure d'une branche (10a) de l'arceau venant s'appliquer contre la face intérieure de l'oreille (11) associée, chaque oreille (11) comportant, dans sa partie basse, un alésage (12) pour recevoir un axe d'articulation (14) traversant un orifice (13) de la branche (10a) associée , l'espace entre les axes (14) restant dégagé.

11. Pédale selon l'une quelconque des revendications précédentes, **caractérisée en ce qu'**elle comporte un cliquet (31) propre à retenir l'organe de maintien (9) dans une position ouverte, lors du dégagement de la cale (6), à l'encontre d'une lame ressort (36), et à libérer cet organe de maintien (9) lors de l'engagement de la cale, le cliquet (31) étant réalisé sous forme d'un cadre dont un bord transversal (32) est engagé dans un logement (33) du corps de pédale et constitue l'axe d'articulation du cliquet, l'autre extrémité (34) du cliquet venant en appui contre l'organe de maintien (9).

12. Pédale selon la revendication 11, **caractérisée en ce que** le cliquet (31) est réalisé sous forme d'un cadre présentant une traverse avant (32) de forme cylindrique constituant un organe d'articulation reçu dans un logement (33) prévu dans le corps (2) de pédale et ouvert vers le bas, le logement (33) s'étendant parallèlement à l'axe de la pédale.

13. Pédale selon la revendication 11 ou 12, **caractérisée en ce que** la lame ressort (36) du cliquet est d'une seule pièce en matière plastique avec le cliquet (31), l'ensemble étant maintenu par serrage au-dessus de l'élément de flexion (18).

14. Pédale selon l'ensemble de la revendication 5 et de l'une des revendications 11 à 13, **caractérisée en ce qu'**un sous-ensemble prêt au montage est formé en engageant dans une fenêtre (35a) du capot (19), la lame ressort (36) et la plaque de flexion (18).

15. Pédale selon l'une des revendications précédentes, **caractérisée en ce que** l'arrière du corps de pédale est dépourvu de partie arrière haute transversale pouvant servir d'appui à l'arrière de la cale, et un moyen de butée (38) est prévu en partie haute à l'arrière de l'arceau (10), pour coopérer avec un moyen de butée conjugué (39) prévu à la partie inférieure d'une extension arrière (40) de la cale (6), et pour empêcher un accrochage lorsque le bec avant de la cale n'est pas correctement engagé sous le rebord avant (7) de la pédale.

16. Pédale selon l'une des revendications précédentes, **caractérisée en ce que** la plaque de flexion (18) est réalisée en matériau composite, en particulier avec des fibres de verre ou des fibres de carbone liées par une résine et orientées orthogonalement à l'axe (3) de la pédale.

## Claims

1. A bicycle pedal with automatic engagement and disengagement, comprising a body (2) mounted so that it can rotate on a spindle (3) with:
- a frontal stop means (4) able to collaborate with a mating stop surface (5) provided on a cleat (6) fixed under the sole of the user's shoe;
- a retaining member (9) mounted to rotate about a pivot pin parallel to the pedal spindle, able to be pressed by an elastic return means against the cleat in order to attach the cleat to the pedal,
the elastic return means comprising a flex element (B) immobilized at one end (B1) in the pedal body, the mean longitudinal direction of which is orthogonal to the pedal spindle and the other end of which rests against the retaining member (9), the retaining member (9) consisting of a bow (10) in the overall shape of a U having two branches (10a) connected by a central part (10b), and the flex element (B) consiting of a flex plate (18) of which the end (B2), other than the end immobilized in the body (2), rests against the bow (10),
**characterized in that** :
- the two branches (10a) of the bow (10) are radialy directed with respect to the pivot pin of this retaining member (9), the body (2) comprising bores on each side of the body, having the same geometric axis, each branch of the bow comprising an orifice (13)capable of being positioned facing a corresponding bore (12) of the body (2), for an articulation round the geometric axis of the bores.

2. The pedal as claimed in claim 1, **characterized in that** the flex element (B) passes above the geometric pivot axis (A) of the retaining member (9).

3. The pedal as claimed in claim 1 or 2, **characterized in that** the flex plate is of rectangular shape.

4. The pedal as claimed in claim 1 or 2, **characterized in that** the flex plate (18) is of trapezoidal shape with the long base housed in the pedal body (2) and the short base resting against the retaining member (9).

5. The pedal as claimed in one of the preceding claims, **characterized in that** one end of the plate is immobilized in the pedal body by in-building achieved by clamping the end of the flex plate (18) against the pedal body using a cap (19).

6. The pedal as claimed in claim 5, **characterized in that** the cap (19) is made of a plastic stiffened by a metal bracket (23).

7. The pedal as claimed in one of the preceding claims, **characterized in that** the immobilized end (B1) of the plate is housed in the pedal body (2) without being blocked therein, the top side of the end (B1) pressing against the body (2) and friction between contacting surfaces holding the plate in place, a rod (37) secured to the body (2) extends transversely under the plate (18) the underside of which rests against the rod (37), the other end (B2) of the plate resting, via its top face, against the retaining member (9) such that the plate works in bending on three points.

8. The pedal as claimed in one of the preceding claims, **characterized in that**, at its end furthest from the in-building, the flex plate (18) rests against a transverse stop element (27) mounted such that it can rotate on the retaining member (9) of the pedal.

9. The pedal as claimed in claim 8, **characterized in that** the transverse stop element is formed by a cylinder (28) mounted such that it can rotate and comprising several flat faces (28a, 28b) at different radial distances from the geometric axis of the cylinder, rotating this element making it possible to modify the preload of the flex plate.

10. The pedal as claimed in any one of the preceding claims, **characterized in that** the bow (10) is inscribed inside the rear of the pedal body which on each side comprises a downwardly projecting lug (11), the exterior face of one branch (10a) of the bow pressing against the interior face of the associated lug (11), each lug (11) in its bottom part having a bore (12) to accommodate a pivot pin (14) passing through an orifice (13) in the associated branch (10a), the space between the pins (14) remaining clear.

11. The pedal as claimed in any one of the preceding claims, **characterized in that** it comprises a pawl (31) capable of keeping the retaining member (9) in an open position, when the cleat (6) is disengaged, against the action of a leaf spring (36), and of releasing this retaining member (9) when the cleat is engaged, the pawl (31) being produced in the form of a frame of which one transverse edge (32) is engaged in a housing (33) of the pedal body and constitutes the pivot pin for the pawl, the other end (34) of the pawl resting against the retaining member (9).

12. The pedal as claimed in claim 11, **characterized in that** the pawl (31) is produced in the form of a frame having a front cross member (32) of cylindrical shape, constituting an articulation member housed in a housing (33) provided in the pedal body (2) and open downward, the housing (33) running parallel to the pedal spindle.

13. The pedal as claimed in claim 11 or 12, **characterized in that** the leaf spring (36) of the pawl is made as one piece with the pawl (31) in plastic, the assembly being held above the flex element (18) by clamping.

14. The pedal as claimed in claim 5 together with one of claims 11 to 13, **characterized in that** a ready-to-fit subassembly is formed by engaging the leaf spring (36) and the flex plate (18) in an opening (35a) in the cap (19).

15. The pedal as claimed in any one of the preceding claims, **characterized in that** the rear of the pedal body has no high transverse rear part that can serve to support the rear of the cleat, and a stop means (38) is provided at the top rear of the bow (10) to collaborate with a mating stop means (39) provided in the lower part of a rear extension (40) of the cleat (6), and to prevent attachment when the snout of the cleat is not correctly engaged under the front lip (7) of the pedal.

16. The pedal as claimed in any one of the preceding claims, **characterized in that** the flex plate (18) is made of composite material, particularly with glass fibers or carbon fibers bound by a resin and directed orthogonal to the pedal spindle (3).

## Patentansprüche

1. Fahrradpedal mit automatischer Einrast- und Ausrastfunktion, mit einem drehbar auf einer Achse (3) montierten Körper (2) mit:,
- einer vorderen Anschlageinrichtung (4), die zum Zusammenwirken mit einer entsprechenden Anschlagfläche (5) geeignet ist, welche an einem unter der Schuhsohle eines Benutzers befestigten Keil (6) vorgesehen ist;
- einem Halteorgan (9), das drehbar um eine Gelenkachse montiert ist, die parallel zu derjenigen des Pedals verläuft, wobei das Halteorgan geeignet ist, durch eine elastische Rückstelleinrichtung gegen den Keil gedrückt zu werden, um das Einhaken des Keils in dem Pedal sicherzustellen;
- wobei die elastische Rückstelleinrichtung ein Biegeelement (B) aufweist, das an einem Ende (B1) in dem Pedalkörper festgelegt ist, wobei die Längsmittelrichtung des Elements orthogonal zur Achse des Pedals verläuft, und dessen anderes Ende an dem Halteorgan (9) anliegt,
- wobei das Halteorgan (9) durch einen im Allgemeinen U-förmige Bogen (10) gebildet ist, der zwei Schenkel (10a) aufweist, die durch einen Mittelteil (10b) miteinander verbunden sind,
- und wobei das Biegeelement (B) aus einer Biegeplatte (18) gebildet ist, deren von dem in dem Körper (2) festgelegten Ende verschiedenes Ende (B2) an dem Bogen (10) anliegt,
**dadurch gekennzeichnet, dass**:
d ie beiden Schenkel (10a) des Bogens (10) in Bezug auf die Drehachse des Halteorgans (9) radial ausgerichtet sind, wobei der Körper (2) Bohrungen (12) zu beiden Seiten des Körpers aufweist, welche die selbe geometrische Achse haben, wobei jeder Schenkel des Bogens eine Öffnung (13) aufweist, welche geeignet sind, zur Bildung eines Gelenks um die geometrische Achse der Bohrungen (12) gegenüber einer entsprechenden Bohrung des Körpers (2) angeordnet zu werden.

2. Pedal nach Anspruch 1, **dadurch gekennzeichnet, dass** das Biegeelement (B) sich über der geometrischen Gelenkachse (A) des Halteorgans erstreckt.

3. Pedal nach Anspruch 1 oder 2, **dadurch gekennzeichnet, dass** die Biegeplatte rechteckig geformt ist.

4. Pedal nach Anspruch 1 oder 2, **dadurch gekennzeichnet, dass** die Biegeplatte (18) die Form eines Trapezes aufweist, dessen große Basis in dem Körper (2) des Pedals angeordnet ist, und dessen kleine Basis an dem Halteorgan (9) anliegt.

5. Pedal nach einem der vorhergehenden Ansprüche, **dadurch gekennzeichnet, dass** es sich bei dem Festlegen eines Endes der Platte in dem Pedalkörper um eine Lagerung handelt, welche durch das Klemmen des Endes der Biegeplatte (18) gegen den Pedalkörper unter Zuhilfenahme einer Abdeckung (19) realisiert ist.

6. Pedal nach Anspruch 5, **dadurch gekennzeichnet, dass** die Abdeckung (19) aus Kunststoff besteht, das durch einen Metallwinkel (25) verstärkt ist.

7. Pedal nach einem der vorhergehenden Ansprüche, **dadurch gekennzeichnet, dass** das festgelegte Ende (B1) der Platte in dem Körper (2) des Pedals sitzt, ohne in diesem festgeklemmt zu sein, wobei die Oberseite des Endes (B1) an dem Körper (2) anliegt und die Reibung der einander berührenden Flächen das Halten der Platte in ihrer Position bewirkt, wobei eine fest mit dem Körper (2) verbundene Stange (37) sich in Querrichtung unter der Platte (18) erstreckt, deren Unterseite an der Stange (37) anliegt, wobei das andere Ende (B2) der Platte mit seiner Oberseite an dem Halteorgan (9) derart anliegt, dass die Platte ein Biegen an drei Punkten durchführt.

8. Pedal nach einem der vorhergehenden Ansprüche, **dadurch gekennzeichnet, dass** die Biegeplatte (18) an ihrem der Lagerung abgewandten Ende an einem quer verlaufenden Anschlagelement (27) anliegt, das drehbar an dem Halteorgan (9) des Pedals angebracht ist.

9. Pedal nach Anspruch 8, **dadurch gekennzeichnet, dass** das quer verlaufende Anschlagelement durch einen Zylinder (28) gebildet ist, welcher drehbar angebracht ist und mehrere ebene Flächen (28a, 28b) aufweist, deren radiale Abstände von der geometrischen Achse des Zylinders verschieden sind, wobei das Drehen dieses Elements das Verändern der Vorspannung der Biegeplatte ermöglicht.

10. Pedal nach einem der vorhergehenden Ansprüche, **dadurch gekennzeichnet, dass** der Bogen (10) in den hinteren Teil des Pedalkörpers passt, welcher auf jeder Seite eine nach unten vorstehende Lasche (11) aufweist, wobei die Außenseite eines Schenkels (10a) des Bogens an der Innenseite der zugehörigen Lasche (11) anliegt, wobei jede Lasche (11) in ihrem unteren Teil eine Bohrung (12) zur Aufnahme einer Gelenkachse (14) aufweist, welche eine Öffnung (13) des zugehörigen Schenkels (10a) durchquert, wobei der Raum zwischen den Achsen (14) frei bleibt.

11. Pedal nach einem der vorhergehenden Ansprüche, **dadurch gekennzeichnet, dass** es eine Raste (31) aufweist, welche geeignet ist, das Halteorgan (9) beim Lösen des Kells (6) entgegen einer Blattfeder (36) in einer offenen Position zu halten, und das Halteorgan (9) beim Einsetzen des Keils freizugeben, wobei die Raste (31) als Rahmen ausgebildet ist, dessen einer Querwand (32) in eine Aufnahme (33) des Pedalkörpers eingesetzt ist und die Gelenkachse der Raste bildet, wobei das andere Ende (34) der Raste an dem Halteorgan (9) anliegt.

12. Pedal nach Anspruch 11, **dadurch gekennzeichnet, dass** die Raste (31) als Rahmen ausgebildet ist, der eine vordere Querstrebe (32) in Form eines Zylinders aufweist, welcher ein Gelenkorgan bildet, das in einer in dem Körper (2) des Pedals vorgesehenen Aufnahme (33) aufgenommen ist und nach unten offen ist, wobei die Aufnahme (33) sich parallel zur Achse des Pedals erstreckt.

13. Pedal nach Anspruch 11 oder 12, **dadurch gekennzeichnet, dass** die Blattfeder (36) der Raste einstückig aus Kunststoff mit der Raste (31) gebildet ist, wobei die Einheit durch Klemmung über dem Biegeelement (18) gehalten ist.

14. Pedal nach Anspruch 5 und einem der Ansprüche 11 bis 13, **dadurch gekennzeichnet, dass** eine montagefertlge Untereinheit gebildet wird, indem die Blattfeder (30) und die Biegeplatte (18) in ein Fenster (35a) der Abdeckung (19) eingesetzt werden.

15. Pedal nach einem der vorhergehenden Ansprüche, **dadurch gekennzeichnet, dass** der hintere Teil des Pedalkörpers keinen oberen querverlaufenden hinteren Teil aufweist, der als Auflage für den hinteren Teil des Keils dienen könnte, und dass im oberen Bereich des hinteren Teils des Bogens (10) eine Anschlageinrichtung (38) vorgesehen ist, um mit einer entsprechenden Anschlageinrichtung (39) zusammenzuwirken, die am unteren Teil einer hinteren Verlängerung (40) des Keils (6) vorgesehen ist, und um ein Einhaken zu verhindern, wenn die vordere Spitze des Keils nicht korrekt unter den vorderen Rand (7) des Pedals eingesetzt ist.

16. Pedal nach einem der vorhergehenden Ansprüche, **dadurch gekennzeichnet, dass** die Biegeplatte (18) aus Verbundmaterial gefertigt ist, insbesondere mit Glasfasern oder Karbonfasern, die durch ein Harz gebunden sind und orthogonal zur Achse (3) des Pedals gerichtet sind.
